# EUROPEAN PATENT SPECIFICATION

(11) **EP 2 840 241 B1**
(45) Date of publication and mention of the grant of the patent: **15.11.2017**
(21) Application number: 14180288.4
(22) Date of filing: 08.08.2014
(51) Int. Cl.: F01N 3/28, F01N 3/20, B01F 3/04, B01F 5/04, B01F 5/06, B01F 5/00

(54) **Method and arrangement for leading exhaust gas in an exhaust gas passage**
Verfahren und Anordnung zur Abgasführung in einem Abgaskanal
Procédé et dispositif pour le guidage d'un gaz d'échappement dans un passage des gaz d'échappement

(30) Priority: 09.08.2013 FI 20135825
(43) Date of publication of application: 25.02.2015
(73) Proprietor: Proventia Emission Control Oy, 90460 Oulunsalo (FI)
(72) Inventor: Amberla, Arno, 37500 Lempäälä (FI); Ylimäki, Kai, 91910 Tupos (FI)
(74) Representative: Berggren Oy, Helsinki & Oulu

(56) References cited:
- EP-A1- 2 843 306
- WO-A1-03/025357
- WO-A1-2004/113690
- WO-A1-2010/078052
- WO-A1-2012/050509
- FR-A1- 2 614 554
- GB-A- 408 612
- US-A- 3 311 456

## Description

The invention relates to a method for leading exhaust gas in an exhaust gas passage, in which method the exhaust gas is led to flow through a first and a second pipe so that the exhaust gas flows through the first pipe to a first direction and through the second pipe surrounding the first pipe to a second direction opposite to the first direction, and before the change of the flow direction of the exhaust gas at least a part of the exhaust gas flow is brought to a rotating and advancing flow. The invention also relates to an arrangement in the exhaust gas passage.

The exhaust gas formed in vehicle engines is led through an exhaust gas passage to the outdoor air. Various cleaning devices, with which the gaseous or particulate impurities present in the exhaust gas are removed, are arranged to the exhaust gas passage. The cleaning devices can also comprise feeding devices of the reactive substance. For example, for removing nitrogen oxides, urea/water solution, which reacts in the SCR catalyst with the nitrogen oxides present in the exhaust gas, is mixed to the exhaust gas, whereby nitrogen gas is generated. In order to obtain an effective mixing and vaporization of the reactive substance, it is important that the exhaust gas has a sufficiently high flow rate in the feeding point of the reactive substance. Furthermore, the exhaust gas must have a sufficiently long flow distance in the exhaust gas passage, so that the reactive substance has time to vaporize. On the other hand, the wish of the vehicle manufacturers is to make the exhaust gas passage to fit in a space as small as possible, what limits the length of the exhaust gas passage. The length of the exhaust gas passage can be increased by making the exhaust gas passage curved. The problem of the curves is, however, that they increase the flow resistance of the exhaust gas in the exhaust gas passage, i.e. they increase the counter-pressure caused by the exhaust gas passage.

Publication WO2010/078052 discloses a flow arrangement of the exhaust gas passage, in which flow arrangement the exhaust gas flows through the first pipe to the first direction and through the second pipe surrounding the first pipe to the second direction opposite to the first direction.

Document WO2004/113690 discloses a converter device to be arranged in an exhaust system of a combustion engine. The device comprises an outer casing, a tubular body enclosed by said casing, helically extending exhaust ducts round the tubular body and injection devices for adding ammonia carrier to the exhaust gas. US3311456 discloses a passage according to the preamble of claim 3.

It is an object of the invention to provide a method and an arrangement in the exhaust gas passage, by which the drawbacks and disadvantages relating to the prior art can be decreased.

The objects of the invention are obtained with a method and an arrangement, which are characterized by what is presented in the independent claims. Some advantageous embodiments of the invention are presented in the dependent claims.

The invention relates to a method for leading exhaust gas in an exhaust gas passage, which has a first pipe and a second pipe surrounding the first pipe. The first pipe is thus at least along a part of its length inside the second pipe. The exhaust gas flowing through the exhaust gas passage is led to flow through the first and the second pipe so that the exhaust gas flows through the first pipe to the first direction and through the second pipe to the second direction opposite to the first direction. The advancing direction of the exhaust gas flow is thus changed to the opposite in the transition point between the first and the second pipe. Before the change of the flow direction of the exhaust gas at least a part of the exhaust gas flow is brought to the rotating and advancing flow. Preferably, the exhaust gas flow is substantially entirely brought to the rotating and advancing flow. The rotating and advancing flow means here that the exhaust gas flow has, in addition to the flow component in the direction of the exhaust gas passage, also a flow component in the direction of the tangent of the exhaust gas passage. The rotating and advancing flow thus advances through the exhaust gas passage in the flow direction of the exhaust gas, and simultaneously at least a part of the exhaust gas rotates inside the exhaust gas passage around the central line of the exhaust gas passage. It has been found that due to the rotating flow form of the exhaust gas flow the flow rate of the exhaust gas is maintained and even increased in the transition point between the first and the second pipe, although the flow direction is changed to the opposite.

In the method according to the invention the exhaust gas is led from the second pipe to the first pipe and brought to the rotating and advancing flow in the space between the first pipe and the second pipe. The space between the first and the second pipe refers here to that section of the pipe defined by the wall of the second pipe, inside of which section the first pipe is located. Preferably, a reactive substance is fed to the exhaust gas flowing in the exhaust gas passage in a point, where the exhaust gas is led from the second pipe to the first pipe. The reactive substance can be for example urea/water solution or fuel.

The invention further relates to an arrangement in the exhaust gas passage, which comprises a first pipe, which has a first opening and a second opening, and a second pipe, which at least partly surrounds the first pipe. The second pipe has a first end and a second end. In the first end of the second pipe there is an end plate closing the second pipe, which prevents the flow-through of the exhaust gas. The arrangement further comprises at least one flow guide, with which at least a part of the exhaust gas to be led to the first pipe can be brought to a rotating and advancing flow. Preferably, substantially all of the exhaust gas to be led to the first pipe can be brought to the rotating and advancing flow with the flow guide. The flow guide is located in the space between the first pipe and the second pipe for guiding the exhaust gas to rotate the first pipe. The exhaust gas is thus designed to flow first to the second pipe and from the second pipe to the first pipe. Preferably, the cross sections of the first and the second pipe are substantially round and the central axes of the first and the second pipe are substantially in the same line.

In a preferred embodiment of the arrangement according to the invention the end plate has a circular edge groove surrounding the end plate, which edge groove has an outer edge and an inner edge. The diameter of the outer edge is substantially equally large than the diameter of the second pipe and the diameter of the inner edge is smaller than the diameter of the first pipe. Preferably, the cross-sectional shape of the edge groove of the end plate is substantially a part of an arc of a circle. The shape of the edge groove decreases the flow resistance in the exhaust gas passage.

Another preferred embodiment of the arrangement according to the invention further comprises a housing, inside of which housing the first opening of the first pipe and the second end of the second pipe open and outside of which the second opening of the first pipe opens. The arrangement according to the invention further comprises support means for fixing a nozzle feeding a reactive substance. The support means may comprise a nozzle hole in the middle of the end plate, to which hole the nozzle feeding a reactive substance is fixed.

An advantage of the method according to the invention is that the increase of the counter pressure caused by the change of the flow direction of the exhaust gas remains very small. The method enables thus to increase the length of the flow route of the exhaust gas without increasing the total length and/or the space requirement of the exhaust gas passage.

Furthermore, an advantage of the method according to the invention is that it increases the flow rate of the exhaust gas and evens out the exhaust gas flow in the first pipe. The method enables thus the feeding of the reactive substance to the exhaust gas flow so that the reactive substance is well mixed to the exhaust gas and quickly vaporized in the exhaust gas passage. Thus, precipitations disturbing the exhaust gas flow cannot be formed to the walls of the flow passage.

In the following, the invention will be described in detail. In the description, reference is made to the enclosed drawings, in which
- Figure 1a: shows by the way of an example a part of an exhaust gas passage belonging to the arrangement according to the invention seen diagonally from the front,
- Figure 1b: shows by the way of an example the structure of the inner parts of the part shown in Figure 1 a,
- Figure 1c: shows a part shown in Figures 1a and 1b in a longitudinal cross-sectional view and
- Figure 2: shows a part of the exhaust gas passage shown in Figures 1a-1c being mounted to a housing of a cleaning device.

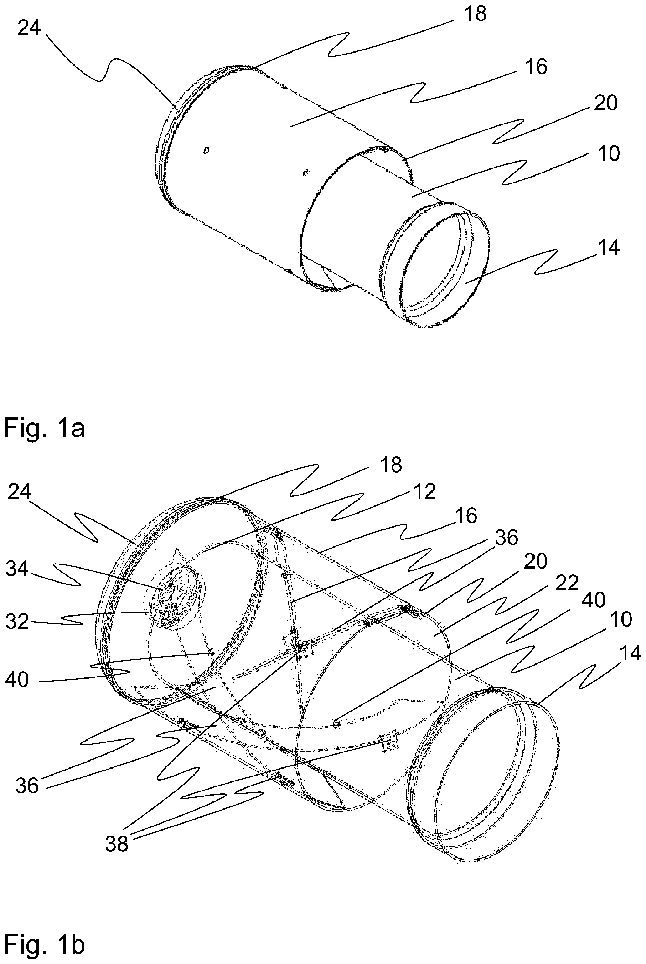

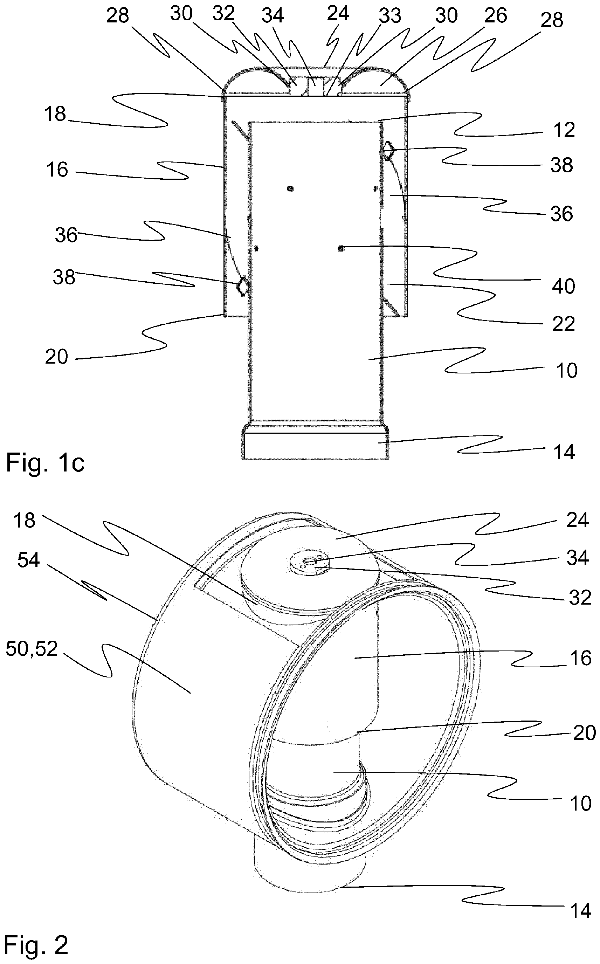

Figures 1a, 1b and 1c show by the way of an example a part of an exhaust gas passage belonging to the arrangement according to the invention. Figure 1a shows a part seen diagonally from above and Figure 1b from the same direction so that the inner structures of the part are shown with dotted lines. Figure 1c shows the above-mentioned part as a vertical cross-sectional view.

The part of the exhaust gas passage has a first pipe 10, which has a first opening 12 and a second opening 14. Around the first pipe there is a second pipe 16, which has a first end 18 and a second end 20. The first and the second pipe are parts having a cylindrical form, i.e. their cross-section is round. The outer diameter of the first pipe is clearly smaller than the inner diameter of the second pipe. Around the second opening of the first pipe there is an extension of the diameter of the pipe, with which extension the size of the second opening has been set to conform to the size of the pipe to be connected with it. The first pipe has been partially fitted inside the second pipe so that the imaginary central axes of the pipes set to the same line. The first and the second pipe are thus parallel and the gap 22 remaining between their walls is substantially uniformly wide (Figure 1c). The diameters of the pipes can be dimensioned so that the cross-sectional area of the first pipe is substantially equally large than the difference of the cross-sectional areas of the second pipe and the first pipe. The edge of the first opening 12 of the first pipe sets in a distance from the level defined by the first end 18 of the second pipe 16, and the edge of the second opening 14 of the first pipe extends outside the space defined by the second pipe 16 in a distance from the level defined by the second end of the second pipe.

In the first end 18 of the second pipe 16 there is an end plate 24, which seals the first end substantially in a gastight manner. The edge part of the end plate is formed as an edge groove 26 surrounding the edges, which edge groove has an outer edge 28 and an inner edge 30 (Figure 1c). The diameter of the outer edge is substantially equally large than the diameter of the second pipe and the diameter of the inner edge is clearly smaller than the diameter of the first pipe. The cross-sectional shape of the edge groove has substantially a shape of an arc of a circle. In the middle of the end plate there is a round fixing plate 32, in the middle of which there is an internal threaded nozzle hole 34 for fixing a nozzle feeding reactive substance (the nozzle is not shown in the Figures). The inner side surface 33 of the fixing plate and the first end 18 of the second pipe 16 substantially set to the same level.

In the gap 22 between the first and the second pipe there are four flow guides 36 for guiding the exhaust gas to be led to the gap. The flow guides are metallic, band-like parts, the first end of which extends substantially to the level defined by the first opening 12 of the first pipe 10 and the second end extends substantially to the level defined by the second end 20 of the second pipe 16. The flow guides rotate around the outer surface of the first pipe so that the ends of the flow guide are clearly in different places in the circumference of the outer surface of the first pipe. Preferably, the opposite ends of the flow guide set on the outer surface of the first pipe substantially to the adjacent quarter points of the circumference. In Figures 1a-1c the flow guides rotate around the first pipe substantially in the same way and they are placed to the gap 22 at regular intervals, whereby the distance of the flow guides is substantially constant. The flow guides do not always need to be geometrically placed at regular intervals, but they can also be placed in another manner. For example in an unevenly distributed flow, the flow guides can be placed so that they set at regular intervals according to the mass or the volume of the flow. The first edge of the flow guides extends so as to engage to the outer surface of the first pipe 10 and the second edge extends so as to engage to the inner surface of the second pipe 16. The flow guides are fixed in their places with the aid of the fixing plates 38 arranged in the wall of the second pipe and with the aid of the fixing holes 40 in the wall of the first pipe. The flow guides guide the exhaust gas to be led to the gap 22 between the walls of the first pipe and the second pipe to rotate around the first pipe simultaneously when the exhaust gas flow advances in the longitudinal direction of the second pipe.

Figure 2 shows a part of the exhaust gas passage shown in Figures 1a-1c being mounted to the housing of the cleaning device. Figure 2 shows only the removable end piece 50 of the housing of the cleaning device. This end piece has a cylindrical wall 52, in the second end of which there is a closed end wall 54. The end piece is designed to be fixed to the opening having a same size and being located at the end of the housing of the cleaning device so that the end piece closes the opening. The cleaning device is preferably a cleaning device for the exhaust gases of diesel engines, inside of which cleaning device there is a cellular particulate filter (Diesel Particulate Filter) and/or an oxidation catalyst (Diesel Oxidation Catalyst), through which the exhaust gas to be cleaned is led to pass. Preferably, the DPF- and/or DOC-cell has been fitted inside the housing so that the exhaust gas, after passing through it, enters to the space defined by the wall 52 and the end plate 54 of the end piece 50.

The part of the exhaust gas passage according to the invention has been arranged to the end piece 50 in a transverse position in relation to the longitudinal direction of the end piece so that the first end 18 of the second pipe 16 extends through the wall 52 to the first side of the end piece and the second opening 14 of the first pipe 10 or the extension pipe attached to it extends through the wall to the second side of the end piece. The end plate 24 and the nozzle hole 34 of the fixing plate 32 located therein that are located in the first end of the second pipe are thus placed outside the space defined by the end piece. The second end 20 of the second pipe opens inside the space defined by the wall 52 of the end piece 50. A flow route is thus formed for the exhaust gas from the inside of the end piece through the gap between the first and the second pipe to the space defined by the first opening of the first pipe 10, the end plate 24 and the second pipe 16 and from this space further through the first pipe outside the end piece. The exhaust gas brought to flow through the second pipe 16 enters due to the flow guides into the movement rotating and advancing around the first pipe 10. This rotating movement of the flow remains in the exhaust gas flow, when it advances to the space between the first opening 12 and the end plate 24. In this space the exhaust gas flow is guided to the first pipe, i.e. the advancing direction of the exhaust gas flow changes 180 degrees. However, due to the rotating course of the exhaust gas flow and due to the shape of the edge groove of the end plate, no strong, sharp changes of direction are formed in the flow route of the exhaust gas, due to which the flow resistance in the change of direction remains very small.

In the method according to the invention with the cleaning device of the exhaust gas shown in Figure 2 urea/water solution is fed to the exhaust gas flow in small drops, which urea/water solution is vaporized in the exhaust gas passage and reacts with the nitrogen oxides present in the exhaust gas reducing them to pure nitrogen. This reducing reaction occurs in the SCR-catalyst located further in the exhaust gas passage, which SCR catalyst is not shown in the Figure. The urea/water solution is fed to the exhaust gas with a nozzle to be mounted to the nozzle hole (the nozzle is not shown in the Figure). With the location of the nozzle hole it is ensured that the nozzle mounted therein sprays the urea/water solution to the first opening 12 of the first pipe 10. At this point the exhaust gas has a very high flow rate, and it is in a strong movement rotating around the central line of the first pipe and advancing evenly through the first pipe. The injectable urea/water solution is thus well mixed to the exhaust gas flow and degraded into small, quickly vaporizing droplets.

Some advantageous embodiments of the method and arrangement according to the invention have been described above. The invention is not limited to the solutions described above, but the inventive idea can be applied in different ways within the scope of the claims.

## Claims

1. A method for leading exhaust gas in an exhaust gas passage according to claim 3, in which method the exhaust gas is led to flow through a first pipe (10) and through a second pipe (16) so that the exhaust gas flows through the first pipe to a first direction and through the second pipe surrounding the first pipe to a second direction opposite to the first direction, wherein said exhaust gas is led from the second pipe (16) to the first pipe (10) and before the change of the flow direction of the exhaust gas at least a part of the exhaust gas flow is brought to a rotating and advancing flow in the space between the first pipe and the second pipe, wherein reactive substance is fed to the exhaust gas flowing in the exhaust gas passage in a place of the exhaust gas passage, where the exhaust gas is led from the second pipe (16) to the first pipe (10).

2. Method according to claim 1, **characterized in that** urea/water solution is fed to the exhaust gas flow with a nozzle.

3. An exhaust gas passage with an arrangement inside, which arrangement comprises a first pipe (10), which first pipe has a first opening (12) and a second opening (14), and a second pipe (16), which second pipe at least partly surrounds the first pipe and which second pipe has a first end (18) and a second end (20), in which first end there is an end plate (24) closing the second pipe, and the arrangement further comprises at least one flow guide (36) located in the space between the first pipe (10) and the second pipe (16) for bringing at least a part of the exhaust gas to be led to the first pipe to a rotating and advancing flow and support means for fixing a nozzle for feeding reactive substance said support means comprise a nozzle hole (34) in the end plate (24), **characterized in that** the second end (20) of the second pipe (16) is open forming a flow route for the exhaust gas and the first pipe (10) extends through said second end (20) outside the space defined by the second pipe (16).

4. Arrangement according to claim 3, **characterized in that** cross-sections of the first pipe (10) and the second pipe (16) are substantially round and the central axes of the first and the second pipe are substantially in the same line.

5. Arrangement according to claim 3 or 4, **characterized in that** the cross-sectional area of the first pipe (10) is substantially equally large than the difference of the cross-sectional areas of the second pipe (16) and the first pipe (10).

6. Arrangement according to any of the claims 3 to 5, **characterized in that**, said flow guides (36) are metallic band-like parts, the first end of which extend substantially to the level defined by the first opening (12) of the first pipe (10) and the second end extends substantially to the level defined by the second end (20) of the second pipe (16).

7. Arrangement according to any of the claims 3 to 6, **characterized in that** the end plate (24) has a circular edge groove surrounding the end plate (26), which edge groove has an outer edge (28), the diameter of which outer edge is substantially equally large as the diameter of the second pipe (16), and an inner edge (30), the diameter of which inner edge is smaller than the diameter (10) of the first pipe.

8. Arrangement according to claim 7, **characterized in that** the cross-sectional shape of the edge groove (26) of the end plate (24) is substantially a part of an arc of a circle.

9. Arrangement according to any of the claims 3 to 8, **characterized in that** it further comprises a housing (50), inside of which housing the first opening (12) of the first pipe (10) and the second end (20) of the second pipe (16) open and outside of which the second opening (14) of the first pipe (10) opens.

## Patentansprüche

1. Ein Verfahren zur Führung von Abgas in einem Abgaskanal gemäß Anspruch 3, wobei in dem Verfahren das Abgas so geführt wird, dass es durch ein erstes Rohr (10) und durch ein zweites Rohr (16) derart fließt, dass das Abgas in einer ersten Richtung durch das erste Rohr fließt und in einer der ersten Richtung entgegengesetzten Richtung durch das zweite Rohr, das das erste Rohr umgibt, wobei das genannte Abgas aus dem zweiten Rohr (16) in das erste Rohr (10) geführt wird und wobei zumindest ein Teil des Abgasflusses in einen sich drehenden und vorwärts bewegenden Fluss gebracht wird in einem Raum zwischen dem ersten Rohr und dem zweiten Rohr vor der Richtungsänderung des Abgases, wobei eine reaktive Substanz in das Abgas gespeist wird, das in dem Abgaskanal fließt, an einer Stelle des Abgaskanals, an der das Abgas aus dem zweiten Rohr (16) in das erste Rohr (10) geführt wird.

2. Verfahren nach Anspruch 1, **dadurch gekennzeichnet, dass** eine Harnstoff/Wasser Lösung in den Abgasfluss mit einer Düse eingespeist wird.

3. Ein Abgaskanal mit einer Anordnung im Innern, wobei die Anordnung ein erstes Rohr (10) umfasst, welches erste Rohr (10) eine erste Öffnung (12) und eine zweite Öffnung (14) aufweist, und ein zweites Rohr (16), wobei das zweite Rohr zumindest teilweise das erste Rohr umschließt und wobei das zweite Rohr ein erstes Ende (18) und ein zweites Ende (20) aufweist, wobei in dem ersten Ende eine Endplatte (24) angeordnet ist, die das zweite Rohr schließt, und wobei die Anordnung weiterhin mindestens eine Flussführung (36) aufweist, die in dem Raum zwischen dem ersten Rohr (10) und dem zweiten Rohr (16) derart angeordnet ist, um zumindest einen Teil des Abgases, das zu dem ersten Rohr geführt wird, in einen sich drehenden und sich vorwärts bewegenden Fluss zu bringen, und Stützmittel, um eine Düse zur Einspeisung einer reaktiven Substanz zu befestigen, wobei die genannten Stützmittel ein Düsenloch (34) in der Endplatte (24) umfassen,
**dadurch gekennzeichnet, dass** das zweite Ende (20) des zweiten Rohrs (16) offen ist und eine Fließroute für das Abgas bildet, und dass das erste Rohr (10) sich durch das genannte zweite Ende (20) außerhalb des Raums, der durch das zweite Rohr (16) bestimmt wird, erstreckt.

4. Anordnung gemäß Anspruch 3, **dadurch gekennzeichnet, dass** die Querschnitte des ersten Rohrs (10) und zweiten Rohrs (16) im Wesentlichen rund sind und die zentralen Achsen des ersten und zweiten Rohrs im Wesentlichen auf einer Linie liegen.

5. Anordnung gemäß Anspruch 3 oder 4, **dadurch gekennzeichnet, dass** der Querschnittsbereich des ersten Rohrs (10) im Wesentlichen gleich groß ist wie die Differenz der Querschnittsbereiche des zweiten Rohrs (16) und des ersten Rohrs (10).

6. Anordnung nach einem der Ansprüche 3-5, **dadurch gekennzeichnet, dass** die genannten Flussführungen (36) metallische streifenförmige Teile sind, deren erstes Ende sich im Wesentlichen bis zu dem Level erstreckt, das durch die erste Öffnung (12) des ersten Rohrs (10) definiert wird, und dass sich das zweite Ende im Wesentlichen bis zu dem Level erstreckt, das durch das zweite Ende (20) des zweiten Rohrs (16) definiert wird.

7. Anordnung nach einem der Ansprüche 3-6, **dadurch gekennzeichnet, dass** die Endplatte (24) eine kreisförmige Kanten-Nut (26) aufweist, welche die Endplatte umschließt, wobei die Kanten-Nut eine äußere Kante (28) aufweist, deren Durchmesser im Wesentlichen gleich groß ist wie der Durchmesser des zweiten Rohrs (16), und eine innere Kante (30), deren Durchmesser kleiner ist als der Durchmesser des ersten Rohrs (10).

8. Anordnung nach Anspruch 7, **dadurch gekennzeichnet, dass** die Querschnittsform der Kanten-Nut (26) der Endplatte (24) im Wesentlichen ein Teil eines Bogens oder Kreises ist.

9. Anordnung nach einem der Ansprüche 3-8, **dadurch gekennzeichnet, dass** sie weiterhin ein Gehäuse (50) aufweist, wobei sich im Innern des Gehäuses die erste Öffnung (12) des ersten Rohrs (10) und das zweite Ende (20) des zweiten Rohrs (16) eröffnen und wobei sich außerhalb dessen die zweite Öffnung (14) des ersten Rohrs (10) öffnet.

## Revendications

1. Procédé pour guider un gaz d'échappement dans un passage de gaz d'échappement selon la revendication 3, dans lequel procédé, le gaz d'échappement est guidé pour s'écouler à travers un premier tuyau (10) et à travers un second tuyau (16), de sorte que le gaz d'échappement s'écoule à travers le premier tuyau dans une première direction et à travers le second tuyau entourant le premier tuyau dans une seconde direction opposée à la première direction, dans lequel ledit gaz d'échappement est guidé du second tuyau (16) au premier tuyau (10) et avant le changement de la direction d'écoulement du gaz d'échappement, au moins une partie de l'écoulement de gaz d'échappement est amenée dans un écoulement de rotation et d'avancement dans l'espace entre le premier tuyau et le second tuyau,
dans lequel une substance réactive est amenée au gaz d'échappement s'écoulant dans le passage de gaz d'échappement dans un endroit du passage de gaz d'échappement où le gaz d'échappement est guidé du second tuyau (16) au premier tuyau (10).

2. Procédé selon la revendication 1, **caractérisé en ce que** la solution d'urée/eau est amenée à l'écoulement de gaz d'échappement avec une buse.

3. Passage de gaz d'échappement avec un agencement à l'intérieur de ce dernier, lequel agencement comprend un premier tuyau (10), lequel premier tuyau a une première ouverture (12) et une seconde ouverture (14), et un second tuyau (16), lequel second tuyau entoure au moins partiellement le premier tuyau et lequel second tuyau a une première extrémité (18) et une seconde extrémité (20), dans laquelle première extrémité, on trouve une plaque d'extrémité (24) fermant le second tuyau, et l'agencement comprend en outre au moins un guide d'écoulement (36) positionné dans l'espace entre le premier tuyau (10) et le second tuyau (16) pour amener au moins une partie du gaz d'échappement à être guidée vers le premier tuyau à un écoulement de rotation et d'avancement et des moyens de support pour fixer une buse pour alimenter la substance réactive, lesdits moyens de support comprennent un trou de buse (34) dans la plaque d'extrémité (24), **caractérisé en ce que** la seconde extrémité (20) du second tuyau (16) est ouverte, formant une voie d'écoulement pour le gaz d'écoulement et le premier tuyau (10) s'étend à travers ladite seconde extrémité (20) à l'extérieur de l'espace défini par le second tuyau (16).

4. Agencement selon la revendication 3, **caractérisé en ce que** des sections transversales du premier tuyau (10) et du second tuyau (16) sont sensiblement rondes et les axes centraux du premier et du second tuyau sont sensiblement sur la même ligne.

5. Agencement selon la revendication 3 ou 4, **caractérisé en ce que** la surface transversale du premier tuyau (10) est sensiblement aussi grande que la différence des surfaces transversales du second tuyau (16) et du premier tuyau (10).

6. Agencement selon l'une quelconque des revendications 3 à 5, **caractérisé en ce que** lesdits guides d'écoulement (36) sont des parties métalliques en forme de bande, dont la première extrémité s'étend sensiblement au niveau défini par la première ouverture (12) du premier tuyau (10) et la seconde extrémité s'étend sensiblement au niveau défini par la seconde extrémité (20) du second tuyau (16).

7. Agencement selon l'une quelconque des revendications 3 à 6, **caractérisé en ce que** la plaque d'extrémité (24) a une rainure de bord circulaire entourant la plaque d'extrémité (26), laquelle rainure de bord a un bord externe (28), le diamètre duquel bord externe est sensiblement aussi grand que le diamètre du second tuyau (16), et un bord interne (30), le diamètre duquel bord interne est inférieur au diamètre (10) du premier tuyau.

8. Agencement selon la revendication 7, **caractérisé en ce que** la forme transversale de la rainure de bord (26) de la plaque d'extrémité (24) est sensiblement une partie d'un arc de cercle.

9. Agencement selon l'une quelconque des revendications 3 à 8, **caractérisé en ce qu'**il comprend en outre un boîtier (50) à l'intérieur duquel boîtier, la première ouverture (12) du premier tuyau (10) et la seconde extrémité (20) du second tuyau (16) s'ouvrent et à l'extérieur duquel, la seconde extrémité (14) du premier tuyau (10) s'ouvre.
